# EUROPEAN PATENT APPLICATION

(11) **EP 4 765 463 A1**
(43) Date of publication of application: **24.06.2026**
(21) Application number: 25827164.2
(22) Date of filing: 27.05.2025
(51) Int. Cl.: H01M 50/593, H01M 50/586, H01M 50/538, H01M 50/477, H01M 50/342, H01M 50/213, H01M 50/249

(54) **BATTERY CELL, AND BATTERY PACK AND VEHICLE INCLUDING BATTERY CELL**

(30) Priority: 24.06.2024 KR 20240082199; 22.05.2025 KR 20250066781
(71) Applicant: LG Energy Solution, Ltd., Seoul 07335 (KR)
(72) Inventor: HWANG, Dong-Sung, Daejeon 34122 (KR); KO, Kwang-Hun, Daejeon 34122 (KR); JO, Min-Ki, Daejeon 34122 (KR); KIM, Geon-Guk, Daejeon 34122 (KR); CHO, Sung-Min, Daejeon 34122 (KR); CHOI, Hyeon-Woo, Daejeon 34122 (KR)
(74) Representative: Goddar, Heinz J.
(86) International application number: PCT/KR2025/007155
(87) International publication number: WO 2026/005300

(57) **Abstract**

Disclosed are a battery cell, and a battery pack and vehicle including the battery cell. A battery cell according to an embodiment of the present disclosure may include: an electrode assembly configured in a structure in which a positive electrode plate, a negative electrode plate, and a separator interposed between the positive and negative electrode plates are wound in one direction; a battery can configured to store the electrode assembly; a positive electrode current collector electrically connected to the positive electrode plate; a cell terminal connected to the positive electrode current collector via a through-hole of a battery cell; a negative electrode current collector electrically connected to the negative electrode plate; and an insulator interposed between the battery can and the positive electrode current collector, wherein the insulator may have a thickness reduction portion formed thereon.

## Description

### TECHNICAL FIELD

This application is based on and claims priority from Korean Patent Application No. 10-2024-0082199, filed on June 24, 2024, and Korean Patent Application No. 10-2025-0066781, filed on May 22, 2025, with the Korean Intellectual Property Office, the disclosure of which is incorporated herein in its entirety by reference.

The present disclosure relates to a battery cell, and a battery pack and vehicle including the battery cell and, more specifically, to a battery cell capable of reducing the weight of an insulator, and a battery pack and vehicle including the battery cell.

### BACKGROUND ART

Secondary batteries, which offer high applicability across product categories and possess electrical characteristics such as high energy density and the like, are widely applied not only to portable devices but also to electric vehicles (EVs) or hybrid electric vehicles (HEVs) that are driven by electric power sources.

Such secondary batteries are gaining attention as a new energy source for enhancing environmental sustainability and energy efficiency not only due to their primary advantage of significantly reducing the use of fossil fuels, but also because they generate no by-products from energy usage.

Secondary batteries that are currently widely used include lithium-ion batteries, lithium polymer batteries, nickel-cadmium batteries, nickel-metal hydride batteries, and nickel-zinc batteries. The operating voltage of this unit secondary battery cell is approximately 2.5V to 4.5V.

Therefore, when an output voltage higher than this is required, a battery module or battery pack may be configured by connecting a plurality of battery cells in series. In addition, a battery module or battery pack may be configured by connecting multiple battery cells in parallel depending on the charge/discharge capacity required for the battery pack. Accordingly, the number of battery cells included in the battery module or battery pack may be set in various ways depending on at least one of the required output voltage and charge/discharge capacity.

Secondary battery cells may be classified into cylindrical, prismatic, and pouch-type battery cells. In the case of a cylindrical battery cell, positive and negative electrode plates are wounded with a separator interposed, as an insulator, between them to form a jelly roll-type electrode assembly, and the electrode assembly is then inserted, along with an electrolyte, into a battery can to form a battery. In addition, the cylindrical battery cell may include a current collector used to electrically connect the positive and negative electrode plates, respectively.

The cylindrical battery cell includes a positive electrode terminal connected to the positive electrode, and a battery can connected to the negative electrode and storing the electrode assembly, and electrical connection between the positive electrode of the electrode assembly and the negative electrode of the battery can may result in a short circuit. To prevent this, an insulator is provided to prevent contact between the positive electrode of the electrode assembly and the negative electrode of the battery can.

The insulator used in conventional cylindrical battery cells has a uniform thickness, which results in excessive occupation of the internal space of the battery can and undesirably increases the overall weight of the battery cell.

### DISCLOSURE

### Technical Problem

The present disclosure is designed to solve the problems of the related art, and therefore the present disclosure is directed to providing a battery cell capable of reducing costs through a lighter insulator, and a battery pack and vehicle including the battery cell.

In addition, the present disclosure is also to provide a battery cell capable of increasing the overall capacity of the battery cell by reducing its overall weight and securing space inside the battery can, and a battery pack and vehicle including the battery cell.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery cell including: an electrode assembly configured in a structure in which a positive electrode plate, a negative electrode plate, and a separator interposed between the positive and negative electrode plates are wound in one direction; a battery can configured to store the electrode assembly; a positive electrode current collector electrically connected to the positive electrode plate; a cell terminal connected to the positive electrode current collector via a through-hole of the battery can; a negative electrode current collector electrically connected to the negative electrode plate; and an insulator interposed between the battery can and the positive electrode current collector, wherein the insulator may have a thickness reduction portion formed thereon.

In an embodiment, the insulator may be divided into a plurality of regions, and the thickness reduction portion may be formed in at least one of a first region and a second region adjacent to the first region, among the plurality of regions.

In an embodiment, the plurality of regions may be partitioned by a partition portion.

In an embodiment, the partition portion may be formed to extend radially outward from a central portion of the insulator.

In an embodiment, a plurality of partition portions may be provided so that each is formed in a linear shape.

In an embodiment, the partition portion may be formed to be radially arranged from the central portion of the insulator.

In an embodiment, the partition portion includes a first linear portion and a second linear portion, and the first region may be formed between the first linear portion and the second linear portion, and a thickness of the first region may be smaller than a thickness of at least one of the first linear portion and the second linear portion.

In an embodiment, the partition portion may be formed in a curved shape on an inward side of the insulator.

In an embodiment, the partition portion may be formed in a circular shape.

In an embodiment, the first region may be formed inward from the partition portion, and the second region may be formed outward from the partition portion.

In an embodiment, at least one of the first region and the second region may be formed in a circular shape.

In an embodiment, a thickness of at least one of the first region and the second region is smaller than a thickness of the partition portion.

In an embodiment, a curved inner groove may be formed on an upper side of the partition portion.

In an embodiment, one or more rupture grooves may be formed radially outward from a central portion of the insulator.

In an embodiment, the partition portion may be formed in a curved shape on an inward side of the insulator, and at least one of the first region and the second region may be formed in a circular shape. In addition, the first region may be formed inward from the partition portion, and the second region may be formed outward from the partition portion, and the rupture groove may be formed in the first region.

In an embodiment, the rupture grooves may be formed to be radially arranged from the central portion of the insulator.

In an embodiment, the insulator may include a first surface in contact with the positive electrode current collector and a second surface opposite the first surface, and the rupture groove may be formed on the second surface.

In an embodiment, the insulator may have a flow hole formed for flow of an electrolyte.

In an embodiment, a coupling protrusion may be formed on the periphery of the insulator so that the insulator is forcibly fitted to the battery can.

In an embodiment, a buffer hole may be formed inward from the coupling protrusion in a radial direction of the insulator.

In an embodiment, three coupling protrusions may be formed on the periphery of the insulator.

In another aspect of the present disclosure, there is provided a battery pack including at least one battery cell described above, and a vehicle including at least one battery cell described above.

### Advantageous Effects

The embodiments of the present disclosure have the effect of reducing costs by reducing the weight of the insulator.

In addition, the embodiments of the present disclosure have the effect of increasing the overall capacity of the battery cell by reducing the overall weight of the battery cell and securing space inside the battery can.

Furthermore, the insulator can be easily fixed to the battery can by force-fitting.

However, the effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a cross-sectional view of a battery cell according to an embodiment of the present disclosure.
FIG. 2 is a cross-sectional view of a battery cell according to a modification of the embodiment shown in FIG. 1.
FIG. 3 is a perspective view of an insulator according to a first embodiment of a battery cell according to an embodiment of the present disclosure.
FIG. 4 is an enlarged view of an insulator in part A of FIG. 1, which is a partially cross-sectional view of the insulator according to the first embodiment in FIG. 3.
FIG. 5 is a drawing illustrating a first modified embodiment of the insulator according to the first embodiment in FIG. 3.
FIG. 6 is a drawing illustrating a second modified embodiment of the insulator according to the first embodiment in FIG. 3.
FIG. 7 is a drawing illustrating a third modified embodiment of the insulator according to the first embodiment in FIG. 3.
FIG. 8 is a drawing illustrating a fourth modified embodiment of the insulator according to the first embodiment in FIG. 3.
FIG. 9 is a drawing illustrating a fifth modified embodiment of the insulator according to the first embodiment in FIG. 3.
FIG. 10 is a perspective view of an insulator according to a second embodiment of a battery cell according to an embodiment of the present disclosure.
FIG. 11 is a cross-sectional perspective view of the insulator according to the second embodiment in FIG. 10.
FIG. 12 is a drawing illustrating a first modified embodiment of the insulator according to the second embodiment in FIG. 10.
FIG. 13 is a drawing illustrating a second modified embodiment of the insulator according to the second embodiment in FIG. 10.
FIG. 14 is a drawing illustrating a third modified embodiment of the insulator according to the second embodiment in FIG. 10.
FIG. 15 is a drawing illustrating a fourth modified embodiment of the insulator according to the second embodiment in FIG. 10.
FIG. 16 is a drawing illustrating a fifth modified embodiment of the insulator according to the second embodiment in FIG. 10.
FIG. 17 is a schematic diagram illustrating the configuration of a battery pack including a battery cell according to each embodiment of the present disclosure.
FIG. 18 is a diagram illustrating a vehicle including a battery pack according to each embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, and does not represent the entire scope of the disclosure, so it should be understood that other equivalents and modifications could be made thereto without departing from the scope of the disclosure at the time of filing the present disclosure.

In the drawings, the sizes of respective elements or specific parts of each element are exaggerated, omitted, or simplified for convenience of explanation and clarification thereof. Accordingly, the sizes of respective elements do not entirely reflect their actual sizes. Descriptions of related known functions or configurations, which may obscure the subject matter of the present disclosure, will be omitted.

In this specification, when it is stated that a certain component is "joined to" or "coupled to" another component, it should be understood that the component may be directly joined or coupled to the other component, or that they may be indirectly joined or coupled via a connecting member provided between them.

Meanwhile, the description of a common component in any one embodiment of the present disclosure may also be applicable to that in other embodiments. For example, the configurations of the second embodiment, which are common to those described in the first embodiment, may refer to the foregoing description of the first embodiment, and the common configurations may also be applicable to the second embodiment. In addition, the description of the second embodiment, which is applicable to the first embodiment, may also be applied to the first embodiment. The same applies to the other embodiments as well.

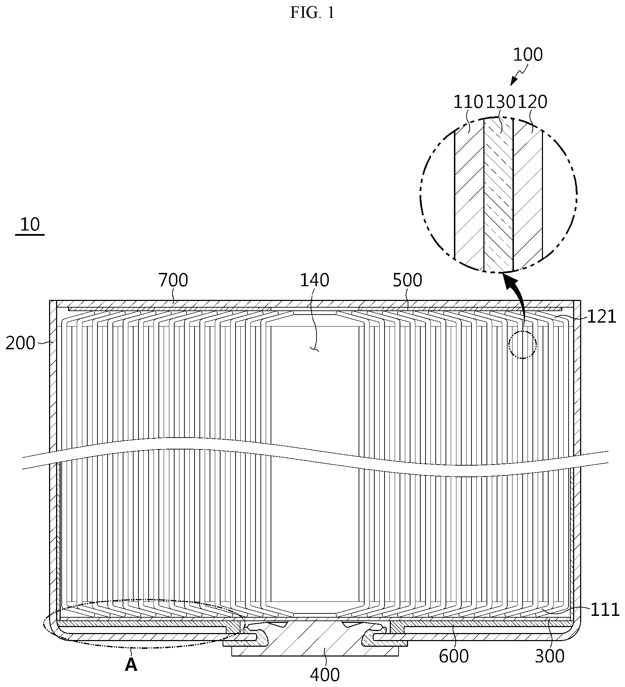

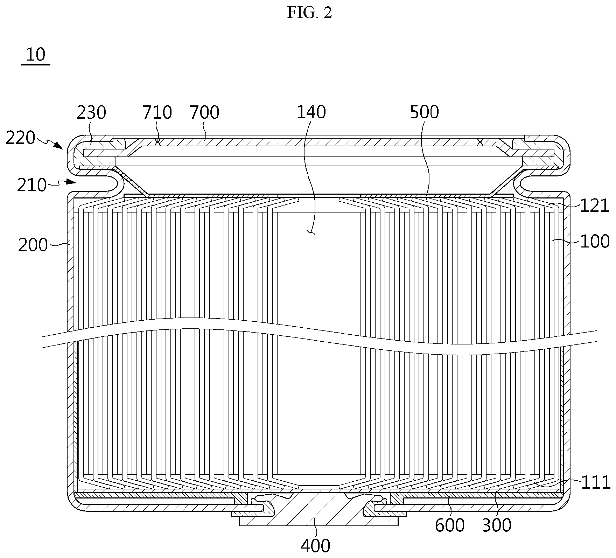

FIG. 1 is a cross-sectional view of a battery cell according to an embodiment of the present disclosure, and FIG. 2 is a cross-sectional view of a battery cell according to a modification of the embodiment shown in FIG. 1.

Referring to FIGS. 1 and 2, a battery cell 10 according to an embodiment of the present disclosure may include a cap 700 coupled to a battery can 200 to seal an opening formed in the battery can 200. In addition, depending on the method of connecting the cap 700, the battery cell 10 may be divided into a type in which a crimping portion and a beading portion are not formed on the battery can 200 (see FIG. 1) and a type in which the crimping portion 220 and the beading portion 210 are formed on the battery can 200 (see FIG. 2).

Referring to FIG. 1, in the case where the beading portion and the crimping portion are not formed on the battery can 200, the cap 700 may be directly welded to the battery can 200 by various welding methods, such as seam welding.

When welding the battery can 200 and the cap 700 of the battery cell 10 by the seam welding, the cap 700 may be joined to the side of the battery can 200 by welding (e.g., horizontal welding). That is, the cap 700 may be coupled so as to come into contact with the inner side of the opening of the battery can 200.

Alternatively, although not illustrated in the drawing, the cap 700 may be joined to the upper surface of the battery can 200 by welding (e.g., vertical welding). That is, the cap 700 may be welded to the upper side of the opening of the battery can 200.

The cap 700 may have various shapes, for example, a plate shape, but the shape of the cap 700 is not limited thereto.

The cap 700 and the battery can 200 may be coupled by various welding methods. For example, the cap 700 may be coupled to the battery can 200 by butt welding, but the disclosure is not limited thereto.

It is obvious that the cap 700 and the battery can 200 may be coupled by other joining methods in addition to welding, and the joining method is not limited thereto. The sealing of the battery cell 10 may be ensured by the coupling of the cap 700 and the battery can 200.

The cap 700 may be made of a metal material. Therefore, the cap 700 may be conductive. For example, the cap 700 may include aluminum. The cap 700 may be electrically connected to the battery can 200. Since the battery can 200 is also made of a conductive metal, the cap 700 coupled to the battery can 200 may be configured to have the same polarity as the battery can 200.

As described above, in the case of the seam welding of directly welding the cap 700 to the battery can 200, the simple fixing structure allows for securing a larger volume of the electrode assembly 100 to be stored inside the battery can 200, which is more advantageous for securing capacitance, based on the same volume of the battery can 200, thereby enhancing the energy density.

In addition, referring to FIG. 2, in the case of the type in which a crimping portion 220 and a beading portion 210 are formed on the battery can 200, the crimping portion 220 is formed on the battery can 200 to fix the cap 700. In addition, the beading portion 210 is formed by pressing the outer circumferential surface of the battery can 200 inward to support the electrode assembly 100 so that it does not fall out of the battery can 200.

The cap 700 may be made of, for example, a metal material to ensure rigidity. The cap 700 may be separated from the electrode assembly 100 to have no polarity. That is, even if the cap 700 is formed of a conductive metal material, it may not have polarity.

The cap 700 not having polarity means that it is electrically insulated from the battery can 200 and the cell terminal 400. As described above, the cap 700 may not have polarity, and its material need not necessarily be a conductive metal.

The cap 700 may be seated and supported on the beading portion 210 formed on the battery can 200. In addition, the cap 700 is secured by the crimping portion 220. A sealing gasket 230 may be interposed between the cap 700 and the crimping portion 220 of the battery can 200 to ensure airtightness of the battery can 200. That is, the sealing gasket 230 may be interposed between the edge of the cap 700 and the opening of the battery can 200.

The insulators 600 according to respective embodiments described below are applicable to the battery cell 10 in FIG. 1, in which the cap 700 is directly connected to the battery can 200 by seam welding without forming a beading portion or crimping portion on the battery can 200. In addition, the insulators 600 according to respective embodiments described below are also applicable to the battery cell 10 in FIG. 2, in which the crimping portion 220 and the beading portion 210 are formed on the battery can 200.

For convenience of explanation, although a battery cell 10 according to an embodiment of the present disclosure will be described based on an embodiment in which the cap 700 is directly welded to the battery can 200 by seam welding, the scope of the present disclosure is not limited thereto.

Referring to FIG. 1, a battery cell 10 according to an embodiment of the present disclosure includes an electrode assembly 100, a battery can 200, a positive electrode current collector 300, a cell terminal 400, a negative electrode current collector 500, and an insulator 600.

Referring to FIG. 1, the electrode assembly 100 has a structure in which a positive electrode plate 110, a negative electrode plate 120, and a separator 130 interposed between the positive electrode plate 110 and the negative electrode plate 120 are wound in one direction. In addition, a central hole 140 may be formed at the center of the electrode assembly 100, and the electrode assembly 100 may be formed in a jelly roll shape.

For example, the electrode assembly 100 may be manufactured by winding a laminate formed by sequentially stacking, at least once, the negative electrode plate 120, the separator 130, the positive electrode plate 110, and the separator 130. Here, the positive electrode plate 110 and the negative electrode plate 120 may be configured in a sheet shape.

That is, the electrode assembly 100 applied to the present embodiment may be a winding-type electrode assembly 100. In this case, an additional separator 130 may be provided on the outer surface of the electrode assembly 100 for insulation from the battery can 200. That is, the electrode assembly 100 may have any winding structure well known in the relate art.

A positive electrode active material may be coated on one or both sides of the positive electrode plate 110, and a first uncoated portion 111 on which the positive electrode active material is not coated may be formed at an end of the positive electrode plate 110. Here, any positive electrode active material known in the art may be used without limitation as the active material to be coated on the positive electrode plate 110.

As described above, although the positive electrode plate 110 having the first uncoated portion 111 formed thereon may be provided, the battery cell 10 according to an embodiment of the present disclosure encompasses an embodiment of a positive electrode plate 110 excluding the first uncoated portion 111. However, for convenience of explanation, the following description will be made based on the case where the first uncoated portion 111 is formed on the positive electrode plate 110.

A negative electrode active material may be coated on one or both surfaces of the negative electrode plate 120, and a second uncoated portion 121 on which the negative electrode active material is not coated may be formed at an end of the negative electrode plate 120. Here, any negative electrode active material known in the art may be used without limitation as the active material to be coated on the negative electrode plate 120.

As described above, although the negative electrode plate 120 having the second uncoated portion 121 formed thereon may be provided, the battery cell 10 according to an embodiment of the present disclosure encompasses an embodiment of a negative electrode plate 120 excluding the second uncoated portion 121. However, for convenience of explanation, the following description will be made based on the case where the second uncoated portion 121 is formed on the negative electrode plate 120.

At least one of the positive electrode plate 110 and the negative electrode plate 120 may include an uncoated portion in which an active material is not coated at the long side end in the winding direction. The first uncoated portion 111 and the second uncoated portion 121 may be wound multiple times around the center of the electrode assembly 100 in a manner such that they are exposed outside the separator 130, thereby functioning as electrode tabs. In addition, the first uncoated portion 111 and the second uncoated portion 121 may be configured to face opposite directions.

In an embodiment, notches may be formed at predetermined intervals on the first uncoated portion 111 and the second uncoated portion 121 to form flag-shaped notched tabs. In the jelly roll-type electrode assembly 100, the notched tabs may be radially bent and flattened. For example, the notched tabs may be bent radially inward or outward.

In addition, the notched tabs may be individually bent during the process of forming the jelly roll-type electrode assembly 100 by winding a laminate. Alternatively, the notched tabs may be bent all at once after the jelly roll-type electrode assembly 100 is formed by winding a laminate.

The notched tabs of the first uncoated portion 111 and the notched tabs of the second uncoated portion 121, which are radially bent and overlap each other, may provide a plane substantially perpendicular to the axial direction at both axial ends of the electrode assembly 100.

The separator 130 may be formed of a porous polymer film made of, for example, a polyolefin-based polymer such as an ethylene homopolymer, a propylene homopolymer, an ethylene-butene copolymer, an ethylene-hexene copolymer, or an ethylene-methacrylate copolymer, in a single layer or multiple layers.

As another example, the separator 130 may be formed of a conventional porous nonwoven fabric, for example, a nonwoven fabric made of high-melting-point glass fibers, polyethylene terephthalate fibers, or the like.

At least one surface of the separator 130 may include a coating layer of inorganic particles. In addition, the separator 130 itself may be formed of a coating layer of inorganic particles. The particles constituting the coating layer may have a structure in which they are bound with a binder to form an interstitial volume between adjacent particles.

In addition, the central hole 140 of the electrode assembly 100 may be used for welding the cell terminal 400 (positive electrode terminal) and the positive electrode current collector 300. That is, the electrode assembly 100 may be configured to weld the cell terminal 400 and the positive electrode current collector 300 by irradiating a laser beam through the central hole 140 of the electrode assembly 100.

Referring to FIG. 1, a through-hole is formed in the battery can 200 and the electrode assembly 100 is stored therein. For example, the battery can 200 may be formed in a cylindrical shape so that the electrode assembly 100 is stored inside the battery can 200, and electrically connected to the negative electrode plate 120 of the electrode assembly 100. As a result, the battery can 200 may have the same polarity as the negative electrode plate 120, i.e., the negative polarity.

The battery can 200 may have a closed portion and an opening, which are positioned to face each other. The electrode assembly 100 is received through the opening formed in the battery can 200, and electrolyte is also injected through the opening formed in the battery can 200.

That is, the battery can 200 is a roughly cylindrical container with an opening formed therein, and may be made of a conductive material, such as metal. The battery can 200 may be made of a conductive metal, such as aluminum, steel, or stainless steel, but is not limited thereto.

In addition, the battery can 200 may have a closed portion. The closed portion may be formed partially on the opposite side of the opening. A through-hole may be formed in the closed portion. In addition, as shown in FIG. 1, the cell terminal 400 may be coupled to the through-hole, and the cell terminal 400 may be electrically connected to the positive electrode current collector 300 via the through-hole. In addition, referring to FIG. 1, an insulator 600 according to each embodiment of the present disclosure, which will be described later, may be interposed between the battery can 200 and the positive electrode current collector 300. The same may be applied to FIG. 2.

The battery can 200 may include a bottom portion and a side wall. The bottom portion and the side wall of the battery can 200 may be manufactured by forming a nickel-plated steel sheet using a deep drawing process, and trimming the end of the side wall with a punch while holding it with a blank holder. However, the material and manufacturing method of the battery can 200 are not limited thereto.

The positive electrode current collector 300 is electrically connected to the positive electrode plate 110. For example, referring to FIG. 1, the positive electrode current collector 300 is connected to the positive electrode plate 110 of the electrode assembly 100.

The positive electrode current collector 300 is made of a conductive metal material and is connected to the first uncoated portion 111 of the electrode assembly 100. The positive electrode current collector 300 may be coupled to a bonding surface formed by bending the end of the first uncoated portion 111 in a direction parallel to the positive electrode current collector 300. The bending direction of the first uncoated portion 111 may, for example, be a direction toward the central winding portion of the electrode assembly 100.

When the first uncoated portion 111 is bent as described above, the space occupied by the first uncoated portion 111 may be reduced, thereby improving energy density. In addition, the bonding area between the first uncoated portion 111 and the positive electrode current collector 300 may increase, leading to improved bonding strength and reduced resistance.

The cell terminal 400 is made of a conductive metal material and is coupled to a through-hole formed in the closed portion of the battery can 200 so that it is electrically connected to the positive electrode current collector 300 via the through-hole. In addition, the cell terminal 400 is electrically connected to the positive electrode plate 110 of the electrode assembly 100 through the positive electrode current collector 300, thereby having the positive polarity.

That is, the cell terminal 400 may function as a positive electrode terminal. In addition, the battery can 200 may be electrically connected to the negative electrode plate 120 of the electrode assembly 100 as described above, thereby having the negative polarity.

Referring to FIG. 1, the negative electrode current collector 500 is electrically connected to the negative electrode plate 120. The negative electrode current collector 500 may be connected to the second uncoated portion 121 of the electrode assembly 100. Here, the negative electrode current collector 500 is made of a conductive metal material such as aluminum, steel, copper, or nickel, and may be electrically connected to the second uncoated portion 121 of the negative electrode plate 120.

The negative electrode current collector 500 may be electrically connected to the battery can 200. As a result, the battery can 200 may have the negative polarity. In addition, at least a portion of the edge of the negative electrode current collector 500 may be directly welded to the inner wall surface of the battery can 200, but is not limited thereto.

The insulator 600 is interposed between the battery can 200 and the positive electrode current collector 300 to prevent contact between the positive electrode of the electrode assembly and the negative electrode of the battery can 200, thereby blocking electrical connection. Therefore, the insulator 600 may be made of a material having electrical insulation performance. The insulator 600 may have a center opening 631 formed in the central portion 630, and the cell terminal 400 may be electrically connected to the positive electrode current collector 300 through the center opening 631 formed in the insulator 600.

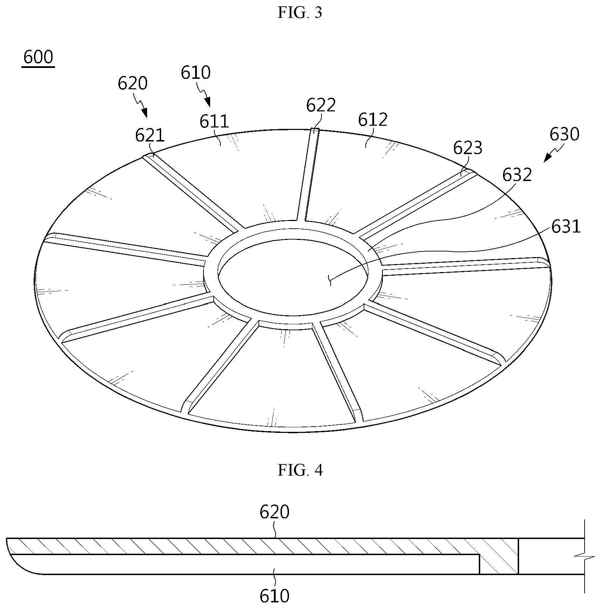

FIG. 3 is a perspective view of an insulator according to a first embodiment of a battery cell according to an embodiment of the present disclosure, and FIG. 4 is an enlarged view of an insulator in part A of FIG. 1, which is a partially cross-sectional view of the insulator according to the first embodiment in FIG. 3.

Referring to FIGS. 3 and 4, a thickness reduction portion 610 may be formed in the insulator 600. In a case where the thickness reduction portion 610 is formed on the insulator 600, the weight of the insulator 600 may decrease, thereby reducing the cost and overall weight of the battery cell 10, and the internal space of the battery can 200 may be secured, thereby increasing the overall capacity of the battery cell 10.

The insulator 600 may be divided into a plurality of regions in various ways. For example, the multiple regions may be partitioned by partition portions 620. Here, the shapes, structures, and number of the partition portions 620 may vary. For example, as shown in FIG. 3, the partition portion 620 may be formed in a linear shape and may be provided in plurality. However, the present disclosure is not limited thereto.

For example, as shown in FIG. 3, the insulator 600 may be formed in a circular shape, and a center opening 631 may be formed in the central portion 630 of the insulator 600. In addition, a center opening peripheral portion 632 having a thickness corresponding to (e.g., the same as) the partition portion 620 may be formed along the circumference of the center opening 631. However, the shape of the insulator 600 is not limited thereto.

Referring to FIG. 3, the partition portion 620 may be formed to extend radially outward from the central portion 630 of the insulator 600, for example, from the center opening peripheral portion 632 of the insulator 600. For example, the partition portion 620 may be formed to be radially disposed from the central portion 630 of the insulator 600.

In a case where a plurality of partition portions 620 are provided, the thickness reduction portion 610 may be formed between adjacent partition portions 620.

For example, referring to FIG. 3, the partition portion 620 may include a first linear portion 621 and a second linear portion 622. In the case where the partition portion 620 includes the first linear portion 621 and the second linear portion 622, a first region 611 may be formed between the first linear portion 621 and the second linear portion 622. In addition, when the partition portion 620 includes a third linear portion 623, a second region 612 may be formed between the second linear portion 622 and the third linear portion 623.

Here, the thickness reduction portion 610 may be formed in at least one of the first region 611 and the second region 612 adjacent to the first region 611, among the plurality of regions.

The thickness of the first region 611 may be smaller than the thickness of the first linear portion 621. In addition, the thickness of the first region 611 may be smaller than the thickness of the second linear portion 622. The thickness of the second region 612 may be smaller than the thickness of the first linear portion 621. In addition, the thickness of the second region 612 may be smaller than the thickness of the second linear portion 622.

As described above, since the regions formed between a plurality of linear portions, i.e., the first region 611 formed between the first linear portion 621 and the second linear portion 622, or the second region 612 formed between the second linear portion 622 and the third linear portion 623, have thicknesses smaller than the first linear portion 621 or the second linear portion 622, the insulator 600 may be made lighter in weight.

Meanwhile, since the space between the battery can 200 and the positive electrode current collector 300 follows a preset standard value, if the overall thickness of the insulator 600 is reduced, it cannot be interposed between the battery can 200 and the positive electrode current collector 300. However, in the battery cell 10 according to an embodiment of the present disclosure, the insulator 600 has the partition portion 620 having a sufficient thickness (the center opening peripheral portion 632 also has a sufficient thickness), so the insulator 600 may be interposed between the battery can 200 and the positive electrode current collector 300. In addition, since the thickness reduction portion 610 is formed on the insulator 600, the insulator 600 may be made lighter in weight.

That is, in the battery cell 10 according to an embodiment of the present disclosure, the insulator 600 may be interposed between the battery can 200 and the positive electrode current collector 300, which have a preset standard distance therebetween, while the thickness reduction portion 610 allows the insulator 600 to be made lighter in weight.

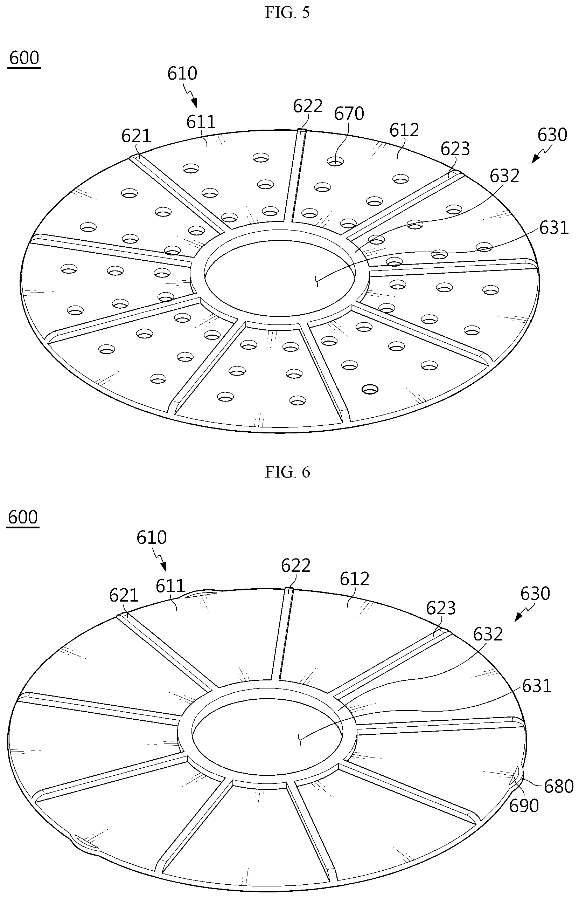

FIG. 5 is a drawing illustrating a first modified embodiment of the insulator according to the first embodiment in FIG. 3.

Referring to FIG. 5, a flow hole 670 for the flow of an electrolyte may be formed in the insulator 600. That is, the insulator 600 may be formed in a structure enabling the electrolyte to flow.

Here, a plurality of flow holes 670 may be formed, and the plurality of flow holes 670 may be spaced apart from each other at preset intervals.

Referring back to FIG. 5, the flow hole 670 may be formed in the thickness reduction portion 610 of the insulator 600. For example, the flow hole 670 may be formed in the first region 611 or the second region 612. In addition, the flow hole 670 may also be formed in other regions between the plurality of linear portions.

The flow holes 670 may be arranged radially outward from the central portion 630 of the insulator 600, but are not limited thereto. In addition, the shapes, number, and arrangement of the flow holes 670 are not limited to those shown in FIG. 5.

As described above, in the case where the flow holes 670 are formed in the insulator 600, the flow of the electrolyte may be facilitated.

The insulator 600 may be made of various materials capable of the flow of the electrolyte, so that the electrolyte may flow through the insulator 600. Here, the insulator 600 may be made of various materials that allow the flow of the electrolyte, such as nonwoven fabric. However, the material of the insulator 600 is not limited thereto.

When the insulator 600 is configured to allow the flow of the electrolyte, the electrolyte may smoothly flow into the electrode assembly 100, and electrolyte byproducts may be prevented from being formed on the surface of the electrode assembly 100, thereby improving the performance of the battery cell 10.

FIG. 6 is a drawing illustrating a second modified embodiment of the insulator according to the first embodiment in FIG. 3.

Referring to FIG. 6, a coupling protrusion 680 may be formed on the periphery of the insulator 600. The insulator 600 may be coupled to the battery can 200 in various ways. For example, the coupling protrusion 680 of the insulator 600 may be forcibly fitted to the battery can 200.

That is, in the case where the coupling protrusion 680 is formed on the outer circumference of the insulator 600, when the insulator 600 is coupled to the battery can 200, the coupling protrusion 680 may be compressed and deformed, allowing the insulator 600 to be forcibly fitted to the inner surface of the battery can 200.

However, the coupling between the insulator 600 and the battery can 200 is not limited thereto.

In addition, a buffer hole 690 may be formed in the insulator 600. The buffer hole 690 may be formed inward from the coupling protrusion 680 in the radial direction of the insulator 600. When the buffer hole 690 is formed in the insulator 600, it may buffer the deformation of the coupling protrusion 680, thereby preventing damage to the coupling protrusion 680.

A plurality of coupling protrusions 680 may be provided, and the plurality of coupling protrusions 680 may be formed at preset intervals on the outer circumference of the insulator 600. Although FIG. 6 shows three coupling protrusions 680, the present disclosure is not limited thereto. However, for convenience of explanation, the following description will be made based on the case where there are three coupling protrusions 680.

The three coupling protrusions 680 may be formed at equal intervals along the outer circumference of the insulator 600. For example, if the insulator 600 is circular, the three coupling protrusions 680 may be formed to be spaced apart from each other by 120 degrees.

As described above, in the case where three coupling protrusions 680 are formed on the insulator 600, even if the battery can 200 is not an exact circle due to production errors, the worker may easily couple the insulator 600 to the battery can 200 in a desired shape. For example, two of the three coupling protrusions 680 are first brought into contact with the inner surface of the battery can 200, and then only the remaining coupling protrusion 680 is pushed into the battery can 200, so that all three coupling protrusions 680 may be easily coupled to the battery can 200. However, this does not limit the number of coupling protrusions 680 to three.

The distance from the center of the insulator 600 to the end of the coupling protrusion 680 may be greater than the radius of the electrode assembly 100. Alternatively, the distance from the center of the insulator 600 to the end of the coupling protrusion 680 may be greater than the inner diameter of the battery can 200. As a result, when the insulator 600 is inserted into the battery can 200, the coupling protrusion 680 may be compressed to allow the insulator 600 to be forcibly fitted to the battery can 200.

This also provides an effect in that the insulator 600 can be easily secured to the battery can 200 by force-fitting.

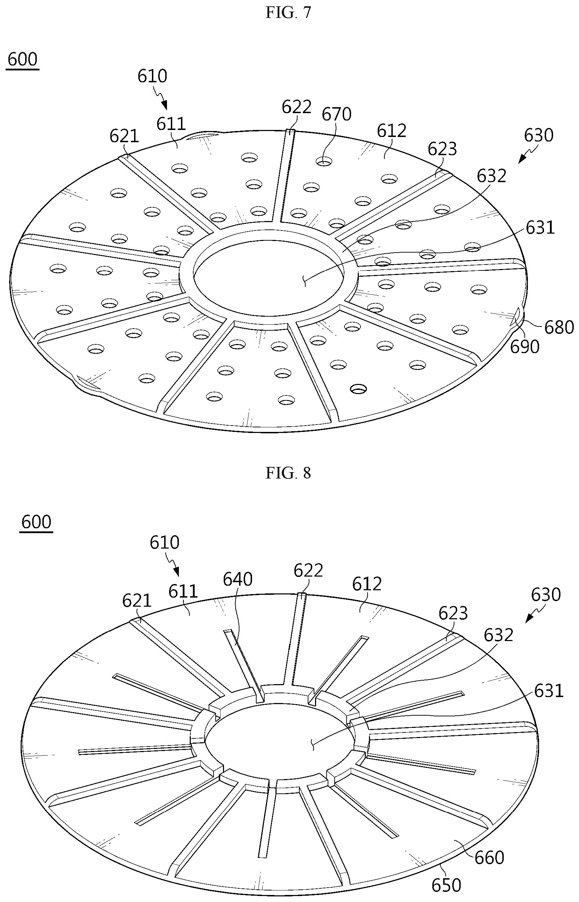

FIG. 7 is a drawing illustrating a third modified embodiment of the insulator according to the first embodiment in FIG. 3.

In the embodiment shown in FIG. 7, the insulator 600 has both a flow hole 670 for the flow of the electrolyte and a coupling protrusion 680 for force-fitting.

The flow hole 670 and coupling protrusion 680 in FIG. 7 are the same as the flow hole 670 described in FIG. 5 and the coupling protrusion 680 described in FIG. 6, so the aforementioned description may be applied thereto.

FIG. 8 is a drawing illustrating a fourth modified embodiment of the insulator according to the first embodiment in FIG. 3.

Referring to FIG. 8, one or more rupture grooves 640 may be formed radially outward from the central portion 630 of the insulator 600.

A vent notch (not shown) may be formed in the battery can 200 so that the battery can 200 may rupture when the pressure inside the battery can 200 exceeds a threshold. In addition, the rupture groove 640 may be formed in the insulator 600 to correspond to the vent notch (not shown) of the battery can 200.

That is, when the pressure inside the battery can 200 exceeds a threshold, the insulator 600 may be easily ruptured by the rupture grooves 640 formed in the insulator 600, and the battery can 200 may also be ruptured by the vent notch (not shown), thereby discharging the flame and gas inside the battery can 200.

Although the vent notch of the battery can 200 is not shown in FIG. 1, the vent notch may be formed in a portion of the battery can 200 close to the position where the cell terminal 400 is formed.

In addition, although the vent notch of the battery can 200 is not shown in FIG. 2, the vent notch may be formed in the battery can 200 on the side where the cell terminal 400 is formed. In addition, although a vent notch 710 is formed in the cap 700 in FIG. 2, this is merely an embodiment, and the vent notch may be formed in the cap 700 or in the battery can 200 so as to close to the location where the cell terminal 400 is formed. That is, the venting direction may be oriented toward the cell terminal 400 or in the direction opposite to the cell terminal 400, and the location of the vent notch may vary depending on the venting direction.

Referring to FIG. 8, in a case where a plurality of rupture grooves 640 are provided, the plurality of rupture grooves 640 may be formed to be radially arranged from the central portion 630 of the insulator 600. However, the shape of the rupture groove 640 is not limited thereto.

In addition, the insulator 600 may include a first surface 650 that comes into contact with the positive electrode current collector 300, and a second surface 660 on the opposite side of the first surface 650, and the rupture grooves 640 may be formed on the second surface 660 of the insulator 600. However, the present disclosure is not limited thereto, and, the rupture grooves 640 may be formed on the first surface 650 of the insulator 600 as necessary.

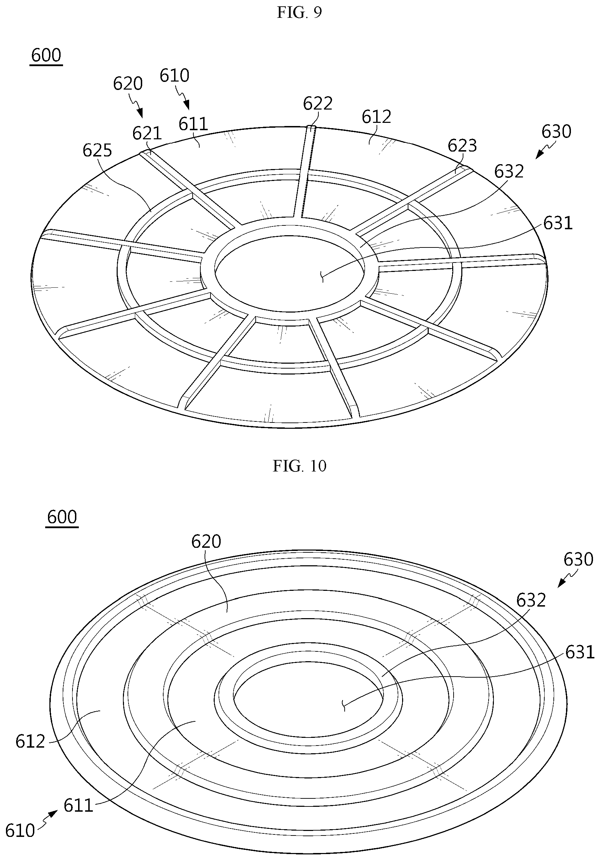

FIG. 9 is a drawing illustrating a fifth modified embodiment of the insulator according to the first embodiment in FIG. 3.

Referring to FIG. 9, the insulator may further include a curved partition portion 625 that connects linear partition portions 620 (e.g., the first linear portion 621 and the second linear portion 622). Accordingly, the first linear portion 621 and the second linear portion 622, which are linear partition portions 620, may be supported by the curved partition portion 625.

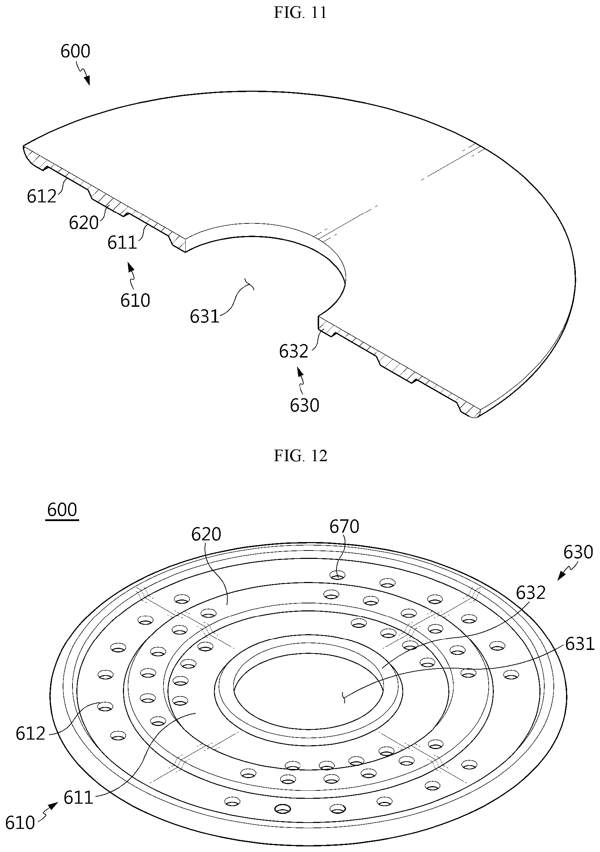

FIG. 10 is a perspective view of an insulator according to a second embodiment of a battery cell according to an embodiment of the present disclosure, and FIG. 11 is a cross-sectional perspective view of the insulator according to the second embodiment in FIG. 10. FIG. 11 illustrates that the opposite surface of that shown in FIG. 10 faces upward.

Referring to FIGS. 10 and 11, a partition portion 620 may be formed in a curved shape on the inward side of the insulator 600. For example, the partition portion 620 may be formed in a circular shape, but is not limited thereto.

Here, a first region 611 may be formed inward from the partition portion 620, and a second region 612 may be formed outward from the partition portion 620. The first region 611 may be formed in a circular shape, and the second region 612 may also be formed in a circular shape, but the shapes of the first region 611 and the second region 612 are not limited thereto.

In addition, referring to FIG. 11, the thickness of the first region 611 may be formed to be smaller than the thickness of the partition portion 620. In addition, the thickness of the second region 612 may be formed to be smaller than the thickness of the partition portion 620.

As described above, if the thicknesses of the first region 611 or the second region 612 are formed smaller than the thickness of the partition portion 620, the insulator 600 may be made lighter in weight.

FIG. 12 is a drawing illustrating a first modified embodiment of the insulator according to the second embodiment in FIG. 10.

Referring to FIG. 12, a flow hole 670 for the flow of an electrolyte may be formed in the insulator 600. That is, the insulator 600 may be formed in a structure enabling the electrolyte to flow.

Here, a plurality of flow holes 670 may be formed, and the plurality of flow holes 670 may be spaced apart from each other at preset intervals.

Referring back to FIG. 12, the flow hole 670 may be formed in the thickness reduction portion 610 of the insulator 600. For example, the flow hole 670 may be formed in the first region 611, the second region 612, or the partition portion 620. The shapes, number, and arrangement of the flow holes 670 are not limited to those illustrated in FIG. 12.

As described above, in the case where the flow holes 670 are formed in the insulator 600, the flow of the electrolyte may be facilitated.

The insulator 600 may be made of various materials capable of the flow of the electrolyte, so that the electrolyte may flow through the insulator 600. Here, the insulator 600 may be made of various materials that allow the flow of the electrolyte, such as nonwoven fabric. However, the material of the insulator 600 is not limited thereto.

When the insulator 600 is configured to allow the flow of the electrolyte, the electrolyte may smoothly flow into the electrode assembly 100, and electrolyte byproducts may be prevented from being formed on the surface of the electrode assembly 100, thereby improving the performance of the battery cell 10.

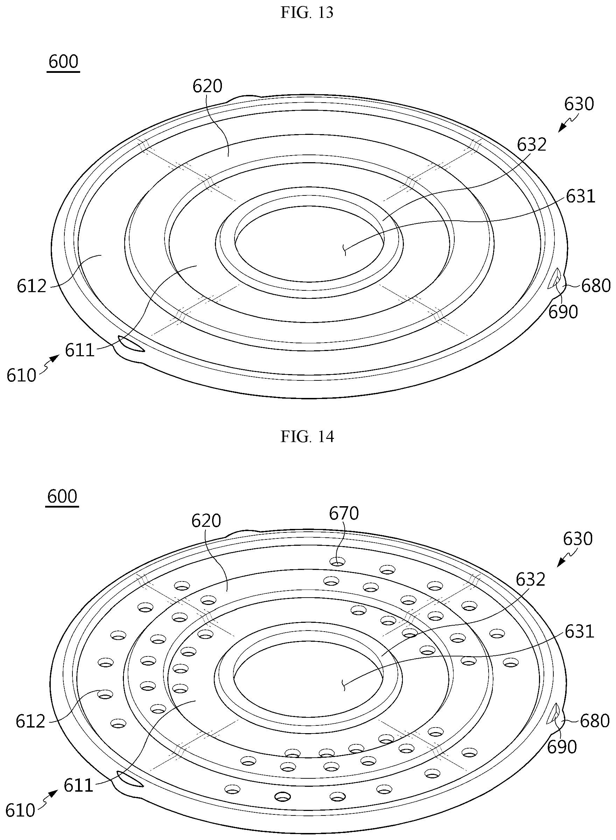

FIG. 13 is a drawing illustrating a second modified embodiment of the insulator according to the second embodiment in FIG. 10.

Referring to FIG. 13, a coupling protrusion 680 may be formed on the periphery of the insulator 600. The insulator 600 may be coupled to the battery can 200 in various ways. For example, the coupling protrusion 680 of the insulator 600 may be forcibly fitted to the battery can 200.

In addition, a buffer hole 690 may be formed in the insulator 600. The buffer hole 690 may be formed inward from the coupling protrusion 680 in the radial direction of the insulator 600. When the buffer hole 690 is formed in the insulator 600, it may buffer the deformation of the coupling protrusion 680, thereby preventing damage to the coupling protrusion.

A detailed description regarding the coupling protrusion 680 has been made in FIG. 6 above, so the relevant description may be applied thereto.

FIG. 14 is a drawing illustrating a third modified embodiment of the insulator according to the second embodiment in FIG. 10.

In the embodiment shown in FIG. 14, the insulator 600 has both a flow hole 670 for the flow of the electrolyte and a coupling protrusion 680 for force-fitting.

The flow hole 670 and the coupling protrusion 680 in FIG. 14 are the same as the flow hole 670 described in FIG. 12 and the coupling protrusion 680 described in FIG. 13, so the aforementioned description may be applied thereto.

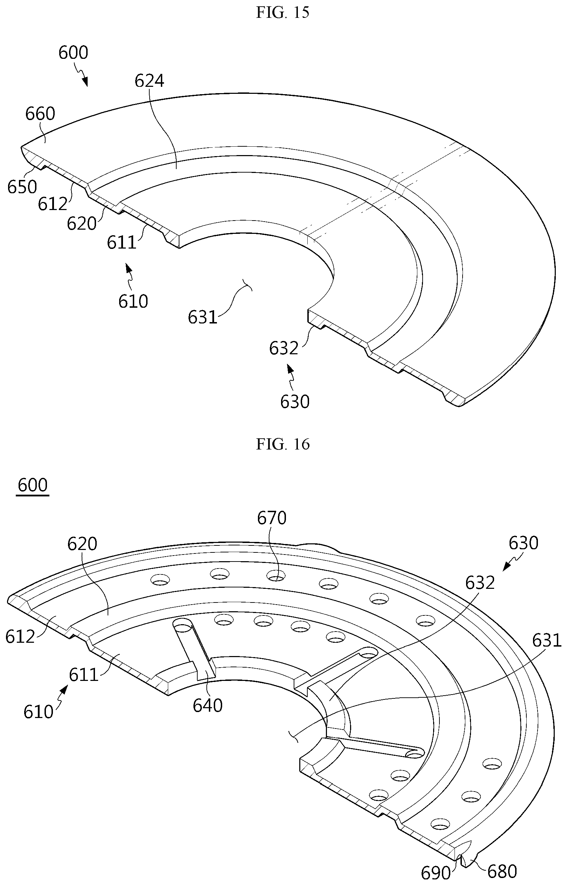

FIG. 15 is a drawing illustrating a fourth modified embodiment of the insulator according to the second embodiment in FIG. 10.

Referring to FIG. 15, a curved inner groove 624 may be formed on the upper side of the partition portion 620. That is, the inner groove 624 may be formed on a second surface 660, which is opposite the first surface 650 where the first region 611 and the second region 612 of the insulator 600 are formed. This may facilitate the weight reduction of the insulator 600.

FIG. 16 is a drawing illustrating a fifth modified embodiment of the insulator according to the second embodiment in FIG. 10.

Referring to FIG. 16, one or more rupture grooves 640 may be formed radially outward from the central portion 630 of the insulator 600.

A basic description regarding the rupture groove 640 in FIG. 16 has been made in FIG. 8 above, so the relevant description of FIG. 8 may be applied thereto, and only differences from the description of FIG. 8 will be described below.

Referring to FIG. 16, the partition portion 620 may be formed in a curved shape on the inward side of the insulator 600, and at least one of the first region 611 and the second region 612 may be formed in a circular shape. In addition, the first region 611 may be formed inward from the partition portion 620, and the second region 612 may be formed outward from the partition portion 620. Although the rupture groove 640 may be formed in the first region 611, but is not limited thereto. That is, the rupture groove 640 may also be formed across the first region 611 and the second region 612.

Referring to FIG. 16, in a case where a plurality of rupture grooves 640 are provided, the plurality of rupture grooves 640 may be formed to be radially arranged from the central portion 630 of the insulator 600. However, the shape of the rupture groove 640 is not limited thereto.

Although FIG. 16 shows both the flow hole 670 and the coupling protrusion 680 formed in the insulator 600, only the rupture groove 640 may be formed without the flow hole 670 and the coupling protrusion 680, only the flow hole 670 and the rupture groove 640 may be formed, or only the coupling protrusion 680 and the rupture groove 640 may be formed.

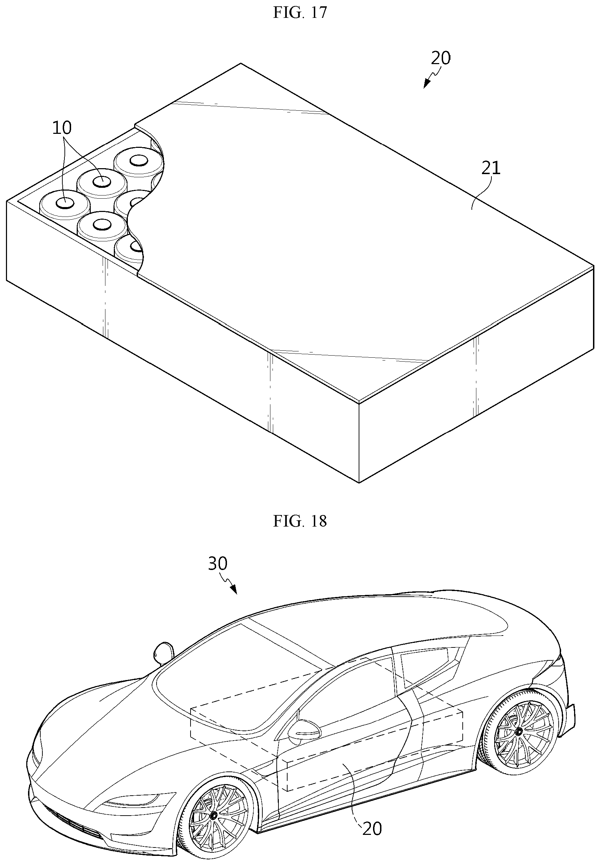

FIG. 17 is a schematic diagram illustrating the configuration of a battery pack including a battery cell according to each embodiment of the present disclosure.

Referring to FIG. 17, a battery pack 20 according to an embodiment of the present disclosure may include one or more battery cells 10 according to each embodiment of the present disclosure described above. In addition, the battery pack 20 may further include a pack case 21 for storing the battery cells 10 and various devices for controlling the charging and discharging of the battery cells 10, such as a BMS, a current sensor, and a fuse.

FIG. 18 is a diagram illustrating a vehicle including a battery pack according to each embodiment of the present disclosure.

Referring to FIG. 18, a vehicle 30 according to an embodiment of the present disclosure may include one or more battery cells 10 according to each embodiment described above or one or more battery packs 20 according to each embodiment described above. Here, the vehicle 30 includes various vehicles, such as an electric vehicle or a hybrid vehicle, designed to use electricity.

Although terms indicating directions such as up(ward), down(ward), left, right, front(ward), and back(ward) directions are used in this specification, it is obvious to those skilled in the art to which the present disclosure pertains that these terms are only for convenience of explanation with reference the relevant drawings and may vary depending on the position of the target object or the position of the observer.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains. Therefore, the foregoing embodiments should be considered in a descriptive sense only and not for purposes of limitation. That is, the true scope of the technical concept of the present disclosure is defined by the claims, and all variations or modifications equivalent thereto should be interpreted as being included within the scope of the present disclosure.

### INDUSTRIAL APPLICABILITY

The present disclosure relates to a battery cell, and a battery pack and vehicle including the battery cell, and particularly applicable to industries related to secondary batteries.

## Claims

1. A battery cell comprising:
an electrode assembly configured in a structure in which a positive electrode plate, a negative electrode plate, and a separator interposed between the positive and negative electrode plates are wound in one direction;
a battery can configured to store the electrode assembly;
a positive electrode current collector electrically connected to the positive electrode plate;
a cell terminal connected to the positive electrode current collector;
a negative electrode current collector electrically connected to the negative electrode plate; and
an insulator interposed between the battery can and the positive electrode current collector,
wherein the insulator has a thickness reduction portion formed thereon.

2. The battery cell of claim 1,
wherein the insulator is divided into a plurality of regions, and
wherein the thickness reduction portion is formed in at least one of a first region and a second region adjacent to the first region, among the plurality of regions.

3. The battery cell of claim 2,
wherein the plurality of regions are partitioned by a partition portion.

4. The battery cell of claim 3,
wherein the partition portion is formed to extend radially outward from a central portion of the insulator.

5. The battery cell of claim 4,
wherein a plurality of partition portions are provided so that each is formed in a linear shape.

6. The battery cell of claim 4,
wherein the partition portion is formed to be radially arranged from the central portion of the insulator.

7. The battery cell of claim 5,
wherein the partition portion comprises a first linear portion and a second linear portion,
wherein the first region is formed between the first linear portion and the second linear portion, and
wherein a thickness of the first region is smaller than a thickness of at least one of the first linear portion and the second linear portion.

8. The battery cell of claim 3,
wherein the partition portion is formed in a curved shape on an inward side of the insulator.

9. The battery cell of claim 8,
wherein the partition portion is formed in a circular shape.

10. The battery cell of claim 8,
wherein the first region is formed inward from the partition portion, and
wherein the second region is formed outward from the partition portion.

11. The battery cell of claim 10,
wherein at least one of the first region and the second region is formed in a circular shape.

12. The battery cell of claim 11,
wherein a thickness of at least one of the first region and the second region is smaller than a thickness of the partition portion.

13. The battery cell of claim 8,
wherein a curved inner groove is formed on an upper side of the partition portion.

14. The battery cell of claim 3,
wherein one or more rupture grooves are formed radially outward from a central portion of the insulator.

15. The battery cell of claim 14,
wherein the partition portion is formed in a curved shape on an inward side of the insulator,
wherein at least one of the first region and the second region is formed in a circular shape,
wherein the first region is formed inward from the partition portion, and the second region is formed outward from the partition portion, and
wherein the rupture groove is formed in the first region.

16. The battery cell of claim 14,
wherein the rupture grooves are formed to be radially arranged from the central portion of the insulator.

17. The battery cell of claim 14,
wherein the insulator comprises a first surface in contact with the positive electrode current collector and a second surface opposite the first surface, and
wherein the rupture groove is formed on the second surface.

18. The battery cell of claim 1,
wherein the insulator has a flow hole formed for flow of an electrolyte.

19. The battery cell of claim 1,
wherein a coupling protrusion is formed on a periphery of the insulator so that the insulator is forcibly fitted to the battery can.

20. The battery cell of claim 19,
wherein a buffer hole is formed inward from the coupling protrusion in a radial direction of the insulator.

21. The battery cell of claim 19,
wherein three coupling protrusions are formed on the periphery of the insulator.

22. A battery pack comprising at least one battery cell according to any one of claims 1 to 21.

23. A vehicle comprising at least one battery cell according to any one of claims 1 to 21.
